# EUROPEAN PATENT APPLICATION

(11) **EP 1 575 262 A1**
(43) Date of publication of application: **14.09.2005**
(21) Application number: 02790801.1
(22) Date of filing: 18.12.2002
(51) Int. Cl.: H04N 1/41, H04N 1/46, H04N 11/04

(54) **IMAGE DATA COMPRESSION DEVICE AND DECOMPRESSION DEVICE AND IMAGE DATA COMPRESSION PROGRAM AND DECOMPRESSION PROGRAM**

(71) Applicant: Nokia Corporation, 02150 Espoo (FI)
(72) Inventor: ATSUMI, Eiji, Kamakura-Shi, Kanagawa 247-0083 (JP)
(74) Representative: TBK-Patent
(86) International application number: PCT/JP2002/013221
(87) International publication number: WO 2004/056084

(57) **Abstract**

An image data compression unit and a decompression unit are offered which are capable of sending and receiving image data with a smaller amount of information. Also, programs for compressing and decompressing image data are offered. With respect to plural single-component image data sets regarding colors that can be obtained by sampling image data about a given region, the image data compression unit divides at least one of the plural single-component image data sets into plural single-component image data sets, converts the plural single-component image data sets into a greater number of single-component image data sets, and then performs compression. Compressed image data obtained by such compression is decompressed, producing plural single-component image data sets. These data sets are combined into one to convert the data sets greater in number than the plural single-component image data sets into the plural single-component image data sets, and then decompression is performed.

## Description

### BACKGROUND OF THE INVENTION

The present invention relates to a compression unit and decompression unit for image data. The invention also relates to programs respectively for compressing and decompressing image data.

In recent years, image data have been frequently sent and received with information appliances such as personal computers, cellular phones, and PDAs (personal digital assistants) . Since such image data has a much greater amount of data than textural data, various formats such as JPEG and JPEG2000 have been developed to compress and decompress still image data. By performing compression and decompression using these formats, image data can be sent and received after compressed to some smaller amount of data. For JPEG or JPEG2000, refer to "Information technology: JPEG2000 image coding system, ISO/IEC FCD1544-1, March 2000" and "Information technology: digital compression and coding of continuous tone still images (JPEG), ISO/IEC 10918-1, 1933."

However, even if such a format is used, the amount of image data is still large. Especially, where image data is sent and received wirelessly, there arises the great problem that long time and much cost are necessary.

The present applicant filed a Japanese patent application, entitled "Image Processing Apparatus, Method, Image Output Apparatus, and Digital Camera Device and Mobile Information Terminal Using them", Application No. 2002-177, 107, on June 18, 2002. In this patent application, an image processing apparatus and an image processing method are disclosed. Furthermore, apparatus and method for dividing color image data including color data regarding plural different color components into plural data sets while maintaining the data size. In addition, the apparatus and method output the color image data after compressing or otherwise processing the data.

The present invention is intended to offer image data compression unit and decompression unit capable of sending and receiving image data with a reduced amount of data by applying this technique. The invention also provides programs respectively for compressing and decompressing image data.

### DISCLOSURE OF THE INVENTION

To achieve the above objects, the present invention provides an image data compression unit which obtains plural single-component image data sets regarding colors that can be obtained by sampling image data about a certain region, divides at least one single-component image data into plural single-component image data sets, converts the single-component image data sets into a greater number of single-component image data sets, and then compresses the data sets.

The "single-component image data set" referred to herein is an image data set containing only one component out of plural components making up colors. Data representing a color image is often made up of data about three components of RGB (red, green, and blue) indicative of the three primary colors of light or made up of three components of YUV (luminance, a color difference, and another color difference) indicating luminance and color differences. A single-component image data indicates data about an image containing only one component such as only R component or only Y component.

Furthermore, the present invention provides a decompression unit for decompressing image data in compressed form. The decompression unit gains plural single-component image data sets regarding colors by sampling image data from a certain region, divides at least one of the single-component image data sets into plural single-component image data sets, converts the plural single-component image data sets into a greater number of single-component image data sets, and then performs compression by a compression unit to thereby obtain compressed image data. The decompression unit combines the plural single-component image data sets which are obtained by decompressing the compressed image data, converts the single-component image data sets greater in number than the plural single-component image data sets into the plural single-component image data sets, and then performs decompression.

In addition, the present invention provides an image data compression unit which obtains pixels produced by performing given sampling from plural pixels arranged in the horizontal and vertical directions. Each of the pixels has individual color information in any one image data set of the three single-component image data sets of the RGB components. With respect to the single-component image data sets of the R and B components, the compression unit eliminates the unsampled pixels and moves them in the horizontal and vertical directions to couple them together. With respect to the single-component image data set of the G component, the compression unit divides this data set of the G component into two single-component image data sets of G1 and G2 components such that pixels spaced regularly from each other in the horizontal and vertical directions become identical components. The compression unit eliminates the unsampled samples and moves them in the horizontal and vertical directions to couple them together, thus converting the three single-component image data sets of the RGB components into four single-component image data sets of R, G1, G2, and B components. Then, the compression unit performs compression.

In the compression unit of the present invention, compression may be performed after converting the four single-component image data sets of the converted R, G1, G2, and B components into four single-component image data sets of Y, U, V, and G2 components.

In the image data decompression unit of the invention, pixels are obtained by performing given sampling from plural pixels arranged in the horizontal and vertical directions. Each of the pixels has individual color information in any one of three single-component image data sets of RGB components. With respect to the single-component image data sets of the R and B components, the unsampled pixels are eliminated and they are moved in the horizontal and vertical directions to couple them together. With respect to the single-component image data set of the G component, the data set is divided into two single-component image data sets of G1 and G2 components such that pixels regularly spaced from each other in the horizontal and vertical directions become identical components. The unsampled pixels are eliminated and they are moved in the horizontal and vertical directions to couple them together. The three single-component image data sets of the RGB components are converted into four single-component image data sets of R, G1, G2, and B components, and then compression is performed by the compression unit, resulting in compressed image data. In the image data decompression unit of the present invention, with respect to the single-component image data sets of the R and B components which are obtained by decompressing the compressed image data, the pixels obtained by performing the above-described sampling are returned to their original positions by moving the pixels in the horizontal and vertical directions. With respect to the single-component image data sets of the G1 and G2 components, their single-component data sets are combined into one. The pixels obtained by performing the sampling are moved in the horizontal and vertical directions to return the pixels to their original positions. The four single-component image data sets of the R, G1, G2, and B components are converted into the three single-component image data sets of the RGB components. Then, decompression is performed.

In the decompression unit of the present invention, the decompression may be performed after converting the four single-component image data sets of the Y, U, V, and G2 components into the four single-component image data sets of the R, G1, G2, and B components.

In the image data compression unit of the present invention, plural pixels arranged in the horizontal and vertical directions are obtained. Each of the pixels has individual color information in any one of three single-component image data sets of YUV components. With respect to the single-component image data set of the Y component, pixels are extracted from those pixels arranged as described above such that one is extracted from every four pixels. That is, pixels are obtained by sampling. On the other hand, with respect to the single-component image data sets of the U and V components, 1 pixel is extracted from every 2 pixels. With respect to the single-component image data sets of the U and V components, the unsampled pixels are eliminated and they are moved in the horizontal or vertical direction and coupled together. With respect to the single-component image data set of the Y component, the data set is divided into two single-component image data sets of Y1 and Y2 components such that pixels regularly spaced from each other in the horizontal and vertical directions become identical components. The unsampled pixels are eliminated and they are moved in the horizontal and vertical directions to couple them together. Compression is performed after converting the three single-component image data sets of the Y, U, and V components into the four single-component image data sets of the Y1, U, V, and Y2 components.

In the image data decompression unit of the present invention, plural pixels which are arranged in the horizontal and vertical directions and each of which has individual color information in any one of three single-component image data sets of Y, U, and V components are obtained. With respect to the single-component image data set of the Y component, pixels are extracted from the pixels arranged as described above such that one pixel is extracted from every four pixels. On the other hand, with respect to the single-component image data sets of the U and V components, one pixel is extracted from every two pixels. Pixels are obtained by performing sampling in this way. With respect to the single-component image data sets of the U and V components, the unsampled pixels are eliminated and they are moved in the horizontal or vertical direction and coupled together. With respect to the single-component image data set of the Y component, this image data set is divided into two single-component image data sets of the Y1 and Y2 components such that pixels regularly spaced from each other in the horizontal and vertical directions become identical components. The unsampled pixels are eliminated and they are moved in the horizontal and vertical directions to couple them together. The three single-component image data sets of the Y, U, and V components are converted into four single-component image data sets of Y1, U, V, and Y2 components, and then compression is performed. Thus, compressed image data is obtained by this image data compression method. With respect to the single-component image data sets of the U and V components which are obtained by decompressing the compressed image data, pixels obtained by performing the aforementioned sampling are moved in the horizontal or vertical direction to move them to their original positions. With respect to the single-component image data sets of the Y1 and Y2 components, the single-component image data sets are combined into one. Pixels obtained by performing the above-described sampling are moved in the horizontal and vertical directions to return them to their original positions. The four single-component image data sets of the Y1, U, V, and Y2 components are converted into the three single-component image data sets of the Y, U, and V components, and then decompression is performed.

In the decompression unit of the present invention, the method of movement may be previously settled with the compression unit described above. The compression unit may be informed of the method from the decompression unit side using data.

In addition, the image data compression unit of the present invention has means for sampling given plural components of image data which are made up of the given components, means for creating single-component image data sets each of which is made up of a part of any one component of the given plural components and which are greater in number than the number of the components from the sampled data, and means for compressing the single-component image data sets. At least two of the single-component image data sets are made of the same component among the given plural components.

The given plural components described above may be three components of R, G, and B or Y, U, and V. In addition, the compression unit according to the invention can have means for converting the single-component image data sets into single-component image data sets made of other components having different natures.

In one embodiment, image data entered into the compression unit according to the present invention is made up of three components of R, G, and B. Single-component image data sets created by sampling the entered image data are four data sets of R, G, G, and B. That is, plural sets of single-component image data of the G component are formed. Preferably, the sampling is performed as follows. One pixel is sampled out of every four pixels, for example, regarding the R and B components. With respect to the G component, one pixel is sampled out of every two pixels. Of these single-component image data sets, the data sets of the three components of R, G, and B are converted to have attributes of Y, U, and V, respectively. Finally, the four single-component image data sets of Y, U, V, and G are compressed. JPEG or JPEG2000 can be used for compression. It is convenient to use JPEG2000 in performing compression.

Additionally, an image data decompression unit of the present invention has means for receiving image data compressed by a compression unit according to the present invention and decompressing the compressed image data to return it to the single-component image data, means for expanding the single-component image data, and second expanding means. Where there are two or more single-component image data sets consisting of the same component among the given plural components, the second expanding means couples and expands the data sets. The decompression unit according to the invention can further have means for converting the single-component image data sets into single-component image data sets made up of other components having different natures. The decompression unit according to the invention can further have means for creating first decompressed image data sets from the plural single-component image data sets and means for creating second decompressed image data sets from the expanded plural single-component image data sets. The first and second decompressed image data sets can be switchingly output, only one at a time.

In one embodiment, compressed image data entered into a decompression unit according to the present invention is decompressed by the same method as the method of compression performed by the compression unit. That is, the compression is uncompressed. Thus, where the decompressed data is made up of four single-component image data sets having components of Y, U, V, and G components, respectively, the three components of Y, U, and V are converted into R, G, and B components, respectively. Then, the single-component image data sets of the R and B components are expanded to twice size both horizontally and vertically. Since there are two single-component image data sets of G component, the two sets are combined and expanded to the same size as the size of the R and B components. Finally, image data sets consisting of three components of R, G, and B are output.

Further, the decompression unit according to the present invention can produce output data that can be switched between unstretched single-component image data and stretched data.

Moreover, as can be easily understood by the skilled in the art, an image data compression unit or decompression unit according to the present invention can be constituted as one compression and decompression unit (CODEC) having the features of both compression unit and decompression unit. Furthermore, these compression unit, decompression unit, and CODEC are often practiced as programs which operate a computer as the image data compression unit, decompression unit, or CODEC according to the present invention. That is, the present invention can be embodied as a compression program that operates a computer as means for accepting image data made up of given plural components, means for sampling the given plural components, means for creating single-component image data sets each of which is made up of a part of any one of the given plural components and which are larger in number than the number of the components from the sampled data, and means for compressing the single-component image data sets. At least two of the single-component image data sets are operated as if they were the same component among the given plural components. Alternatively, the invention can be embodied as a decompression program which operates a computer as means for decompressing image data compressed by a compression program or compression unit according to the present invention and returning the image data to the single-component image data sets, means for expanding the single-component image data sets, and second expanding means. Where there are two or more single-component image data sets made up of the same component among the given plural components, the second expanding means couples and expands the two or more sets. In addition, the invention can also be embodied as a compression-decompression program having the functions of both programs.

In the compression unit or decompression unit of the present invention, JPEG or JPEG2000 may be used for the compression or decompression.

### BRIEF DESCRIPTION OF THE DRAWINGS

Fig. 1 is a diagram illustrating a configuration of a personal computer (PC) according to a first embodiment of the present invention, the configuration being associated with acceptance and compression of image;
Fig. 2 is a conceptual diagram showing a compression method using JPEG;
Fig. 3 is a diagram illustrating a configuration of a personal computer (PC) according to the first embodiment of the invention, the configuration being associated with decompression of compressed data;
Fig. 4 is a flowchart illustrating the operation of a compression unit according to the present invention;
Fig. 5 is a flowchart illustrating the operation of a decompression unit according to the present invention;
Fig. 6 is a diagram illustrating a configuration of a personal computer (PC) according to a second embodiment of the invention, the configuration being associated with acceptance and decompression of image; and
Fig. 7 is a diagram illustrating a configuration of a personal computer (PC) according to the second embodiment of the invention, the configuration being associated with decompression of compressed data.

### DETAILED DESCRIPTION OF THE PREFERRED EMBODIMENTS

The present invention is described while taking a personal computer (hereinafter often abbreviated as PC) to which the present invention is applied as an example with reference to the accompanying drawings. This PC is connected with the Internet and can send and receive data such as image data through the Internet. Furthermore, the computer can be connected with a digital camera or other device to accept image data from the digital camera or other device. Especially, the PC to which the present invention is applied can decompress and output a compressed image, which has been sent or received in accordance with the present invention after an image is accepted from the Internet or digital camera, in accordance with the invention and then output the decompressed image. It is to be noted that the PC described below is an example of a medium to which the present invention can be preferably applied. Obviously, the invention can be applied to various digital devices such as digital camera, in addition to a PC.

### 1. First Embodiment

### 1-1. Acceptance and Compression of Image

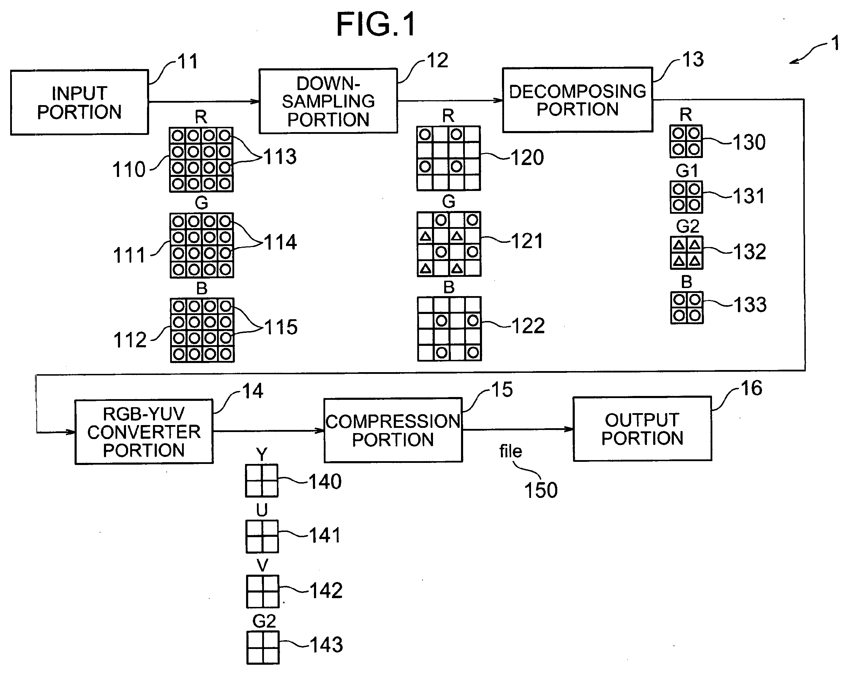

A configuration of a personal computer (PC) according to the first embodiment is described by referring to Fig. 1, the configuration being associated with acceptance and compression of an image.

### 1) Input Portion

An input portion 11 is a portion which is connected with an external device such as a digital camera and which accepts image data into the body of the PC. This portion may use the well-known USB configuration. Alternatively, the portion may be so designed that it can be connected with the Internet and download image data from a server on the Internet. In this case, an Ethernet configuration or the like may be used.

Image data in a currently generally used format is often made up of three single-component image data sets (flat plane) of R, G, and B or Y, U, and V. RGB and YUV are somewhat different in property. It is now assumed that image data made of RGB components is accepted. The data is shown in 110 (R: red image), 111 (G: green image), and 112 (B: blue image) in Fig. 1. Each of these single-component image data sets 113, 114, and 115 contains plural pixels. Each pixel has intrinsic positional information and color information in a corresponding one of the single-component image data sets 113, 114, and 115. The color information contains luminance, for example. The color information of each pixel in each single-component image data set can be represented by 8 bits, for example. As a result, full color information of a pixel can be represented by 8 × 3 = 24 bits, for example. The single-component image data sets 110, 111, and 112 of the RGB components shown in Fig. 1 are used for illustrative purposes only. It is not always necessary to create such single-component image data sets. This will be described in further later.

### 2) Down-Sampling Portion

A down-sampling portion 12 is a portion which samples color information from the single-component image data sets 110, 111, and 112 of the RGB components. The sampling is carried out in a range in which deterioration of the image is tolerated. Preferably, the sampling is performed by a method facilitating interpolation. One conceivable example of preferable sampling method is based on a Bayer array of primary colors. As is well known, the Bayer array of primary colors is one type of array of RGB components. In this example, areas of G component are disposed checkerwise, and R and B components are alternately arranged between the areas of the G component. In the present invention, according to this array, color information is sampled at given positions of single-component image data sets 110, 111, and 112 of the RGB components. Sampling is done based on this Bayer array of primary colors (in this embodiment, this is a so-called RGGB pattern), and the results are conceptually shown in Fig. 1 for each of the single-component image data sets 120, 121, and 122 of the RGB components. In the figure, with respect to the single-component image data set 120 of the R component, locations indicated by O indicates the positions of sampled pixels. Locations indicated by spaces indicate unsampled pixels. Similarly, with respect to the single-component image data set 121 of the G component, locations indicated by O or Δ indicate sampled pixels. The locations indicated by spaces indicate unsampled pixels. The single-component image data set 122 of the B component is similar to the single-component image data set 121 of the R component. As is obvious, where sampling is done based on this Bayer array of primary colors, with respect to the single-component image data sets 120 and 1,22 of the R and B components, color information of 4 pixels in total is selected by extracting 1 pixel from every 8 pixels. With respect to the single-component image data set 121 of the G component, color information of 8 pixels in total is selected by extracting 1 pixel from every 4 pixels. It is considered that more information about the G component is obtained than about the R and B components, because the human eye is most sensitive to the G component among the RGB components.

It is not always necessary that the method of sampling be based on the aforementioned method. For example, with respect to the single-component image data sets of the G and B components, color information of 4 pixels may be selected. With respect to the single-component image data set of the R component, color information of 8 pixels may be selected. Furthermore, sampling may be done based on a so-called GRBG pattern among Bayer arrays of primary colors. However, to prevent image quality deterioration during decompression, sampling is preferably done under the condition where the pixels of the RGB components are maximally regularly spaced from each other as in the aforementioned Bayer array of primary colors (e.g., the pixels are equally spaced from each other in the horizontal and vertical directions, for example, in a Bayer array of primary colors).

### 3) Decomposing Portion

A decomposing portion 13 changes the three single-component image data sets of the RGB components obtained by performing sampling into four single-component image data sets of R, G1, G2, and B components, and reduces the single-component image data sets. That is, the decomposing portion eliminates at least one unsampled pixel from each single-component image data set and creates a smaller single-component image data set than the original single-component image data set. A conceivable preferable method of reducing the size of the image data sets consists, for example, of eliminating all pixels not sampled by the down-sampling portion and moving the sampled pixels in the horizontal and vertical directions to place them adjacent to each other or couple them together. Where the pixels of the RGB components are regularly sampled based on the aforementioned Bayer array of primary colors and the sampled pixels are reduced in amount of data by the above-described preferable method, the image remains recognizable after the reduction. That is, each single-component image data set obtained after the processing performed in the decomposing portion 13 can be regarded as a simple reduction of the original image size.

Four single-component image data sets 130, 131, 132, and 133 produced by processing performed in the decomposing portion 13 are conceptually shown in Fig. 1. As shown here, processing in the decomposing portion 13 reduces the single-component image data sets 120 and 122 of the R and B components of the 4 × 4 pixels out of the three single-component image data sets 120, 121, and 122 of the RGB components into single-component image data sets 130 and 133, respectively, of the R and B components of 2 × 2 pixels (half resolution) by the above-described preferable method. With respect to the single-component image data set 121 of the G component of 4 × 4 pixels, the data set is divided into two and compressed by the aforementioned preferable method into single-component image data sets 131 and 132 of the G1 and G2 components of 2 × 2 pixels (half resolution) . The single-component image data set 131 of the G1 component is a single-component image data set indicating color information of pixels in locations indicated by O out of the pixels sampled by the down-sampling portion shown in Fig. 1. On the other hand, the single-component image data set 132 of the G2 component is a single-component image data set indicating color information of pixels at the locations indicated by Δ. Since the single-component image data set 131 of the G1 component and the single-component image data set 132 of the G2 component are elements forming the single-component image data set of the G component, it is obvious that the full single-component image data set 121 of the original G component can be obtained by combining the two data sets.

In the example shown above, the single-component image data sets 131 and 132 of the G1 and G2 components, respectively, are formed by regularly dividing the single-component image data set of the G component such that pixels spaced from each other in the horizontal and vertical directions become identical components, for example, as shown above. The designer can arbitrarily determine what portion of the G component is used as the G1 or G2 component. However, where the single-component image data set of the G component is divided regularly, it can be said that the single-component image data sets 131 and 132 of the G1 and G2 components, respectively, are, so to speak, reduced versions of the G component of the original image. Accordingly, there is the great advantage that the viewer can recognize the original image at some degree of accuracy only by the G1 component or only by the single-component image data set of the G2 component (furthermore by the YUV components obtained by converting the remaining R-G1-B components by an RGB-YUV converter portion 14 (described later) or only by the Y component of the YUV components). In addition, where the single-component image data set of the G component is divided regularly as in the above example, it is not necessary to clearly discriminate between the single-component image data sets of the G1 and G2 components, respectively. That is, if G1 and G2 are interchanged in the description of the present specification in reading the description, no problems take place at all.

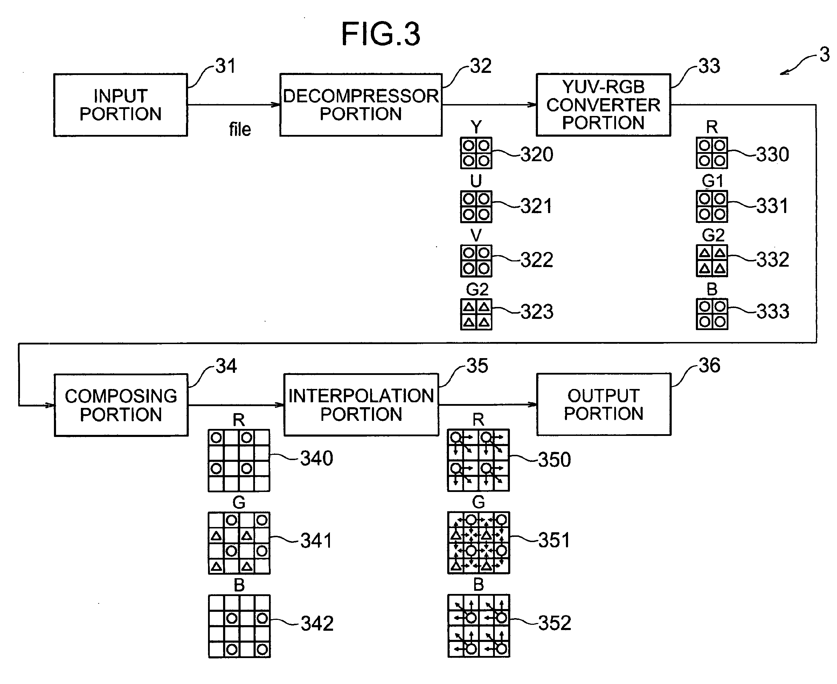

By processing performed in the decomposing portion 13, the amount of data in the input portion 11 (i.e., 4 × 4 (number of pixels within the fundamental area) × 3 (number of image data items of a single component) × 8 (number of bits per pixel in each single-component image data set of RGB components) = 384 bits) is reduced to 4 (number of pixels in each single-component image data set of R-G1-G2-B components) × 4 (number of image data items of a single component) × 8 (number of bits per pixel in each single-component image data set of the R-G1-G2-B components) = 128 bits. That is, the amount of data is reduced to one third. The whole amount of data is reduced by the processing performed in the decomposing portion 13 in this way, but the positional information of each pixel is lost. Nonetheless, the lost positional information can be easily recovered at the time of recovery by previously making an arrangement of the processing performed in the decomposing portion 13 and down-sampling portion 12 with a recovering process (described later) (especially, a composing portion (34 in Fig. 3)) or by adding information about positions to decomposed data, file, or bit streams if such arrangement does not exist.

### 4) RGB-YUV Converter Portion

An RGB-YUV converter portion 14 converts the RGB components into YUV components by a method well known to the skilled in the art. In this embodiment, three single-component image data sets 130, 131, and 133 of the R-G1-B components out of the four single-component image data sets 130, 131, 132, and 133 of the R-G1-G2-B components produced in the processing performed in the decomposing portion 13 are converted into three single-component image data sets 140, 141, and 142 of the YUV components. The single-component image data set 133 of the remaining G2 component is not converted into YUV components but left intact. As a result, as also shown in Fig. 1, three single-component image data sets 140, 141, and 142 of the YUV components each of 2 × 2 pixels and single-component image data set 143 (133) of the G2 component are formed by the processing performed in the RGB-YUV converter portion. Conversion to YUV is done to use JPEG in a compression portion (described next) .

### 5) Compression Portion

A compression portion 15 compresses the three single-component image data sets 140, 141, and 142 of the YUV components and the single-component image data set 143 of the G2 component obtained by the processing performed in the decomposing portion 13 using JPEG, JPEG2000, or other method. Various methods which are usually used for image compression can be used as this method of compression. The method is not limited to JPEG or the like. Since these methods of compression are well known, detailed description of the methods themselves is omitted herein. By the processing in the compression portion 15, the whole information in the fundamental region can be compressed into data of about 6 bits, for example.

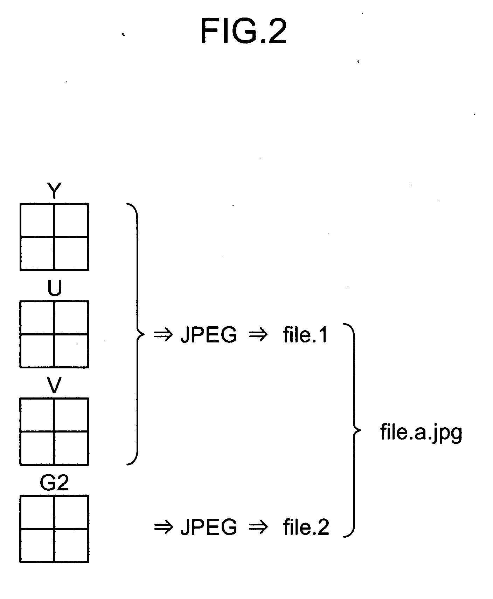

Where compression is performed using JPEG, information in the three single-component image data sets 140, 141, and 142 of the YUV components is compressed as one file (e.g., "file. 1") as shown in Fig. 2. Information in the single-component image data 143 of the G2 component is compressed as another file (e.g., "file.2"), because processing using JPEG needs to be performed twice for the G2 component. This will be obvious to the skilled in the art. The relation between the compressed files "file.1" and "file.2" can be clarified by their file names (e.g., name "file.a.jpg" is given to "file.1" and associatively name "file.b.jpg" is given to "file.2" or by a declaration in an unused field within the file format. The receiver side can know that the data files are interrelated by seeing the file names.

On the other hand, where compression is performed using JPEG2000, the single-component image data sets 140, 141, 142, and 143 of the Y-U-V-G2 components can be separately compressed. As a result, four files are created. The relations among them can be clarified by their file names in the same way as the foregoing.

### 6) Output Portion

An output portion 16 outputs files compressed by the compression portion 15. The outputting is for saving files on a storage medium or sending them to a server on the Internet. 1-2. Decompression of Compressed Data

A configuration of a PC associated with decompression of compressed data is described by referring to Fig. 3, the PC being according to the first embodiment.

### 1) Input Portion

An input portion 31 reads in data from the storage medium, the data being compressed by a method according to the present invention. Alternatively, the input portion 31 downloads such data from a server on the Internet.

### 2) Decompression Portion

A decompression portion 32 decompresses a file compressed by the compression portion (15 in Fig. 1) by a method corresponding to the method of compression used by the transmitter side and returns the compressed file to three single-component image data sets 320, 321, 322 of the YUV components of 2 × 2 pixels and single-component image data set 323 of the G2 component of 2 × 2 pixels, i.e., four single-component image data sets in total. These single-component image data sets may be considered as exactly the same as the four single-component image data sets (140, 141, 142, and 143 in Fig. 1) of the Y-U-V- G2 components prior to compression done by the compression portion (15 in Fig. 1).

### 3) YUV-RGB Converter Portion

A YUV-RGB converter portion 33 performs processing opposite to that performed in the RGB-YUV converter portion (14 in Fig. 1) on the transmitter side. Because of the processing performed in the YUV-RGB converter portion 33, the three single-component image data sets 320, 321, and 322 of the YUV components are converted into the three single-component image data sets 330, 331, and 332 of the unconverted R-G1-B components. The single-component image data set 323 of the remaining G2 component is kept intact because it is not processed by the RGB-YUV converter portion (14 in Fig. 1) . As a result, as shown in Fig. 3, processing performed in the YUV-RGB converter portion 33 creates four single-component image data sets 330, 331, 332, and 333 of the R-G1-G2-B components each of 2 × 2 pixels.

### 4) Composing Portion

The composing portion 34 is a portion mounted in a corresponding manner to the decomposing portion (13 in Fig. 1). The composing portion 34 converts the four single-component image data sets 330, 331, 332, and 333 of the R-G1-G2-B components into the three single-component image data sets 340, 341, and 342 of the RGB components in a reverse manner to the decomposing portion (13 in Fig. 1). The decomposing portion 34 also expands the single-component image data sets into their original size by reflecting positional information lost in the decomposing portion in the converted three single-component image data sets of the RGB components. (That is, the reduced single-component image data sets are returned to their original size.) The expansion can be carried out, for example, by moving the pixels sampled by the down-sampling portion (12 in Fig. 1) in the horizontal and vertical directions to return the pixels to their original positions. Because of this operation, the positional information lost by the processing performed in the decomposing portion (13 in Fig. 1) is reflected in the single-component image data sets of the RGB components. The three single-component image data sets 340, 341, and 342 produced by the processing performed in the composing portion 34 are conceptually shown in Fig. 3. As can be seen from this figure, because of the processing in the composing portion 34, the single-component image data sets 330 and 333 of the R and B components, respectively, each of 2 × 2 pixels are changed into single-component image data sets 340 and 342 of the R and B components, respectively, each of 4 × 4 pixels (full resolution). The single-component image data sets 331 and 332 of the G1 and G2 components, respectively, each of 2 × 2 pixels are combined with the data set of the G component and expanded, producing the single-component image data set 341 of the G component of 4 × 4 pixels (full resolution).

### 5) Interpolation Portion

An interpolation portion 35 interpolates color information lost by sampling done in the down-sampling portion (12 in Fig. 1) of the transmitter. This interpolation results in expansion of data. As is well known in the art, there exist various methods of interpolating pixels. Therefore, a method of interpolation matched to the computing capability of the apparatus and the required image quality should be used. The simplest method of interpolation is to copy the same value as the value of a pixel where data is present into an adjacent pixel where no data is present. Because of the processing in the interpolation portion 35, the three single-component image data sets 350, 351, and 352 of the RGB components are produced. In the figure, the arrows schematically show the movement of data when an interpolation is performed. Because of the operations described so far, recovery of the original color image is completed.

### 6) Output Portion

An output portion 36 outputs the decompressed original color image, i.e., decompressed image data. For example, the output portion 36 can be a display device on which a color image is displayed. Note that the output portion 36 may also be a storage medium which does not decompress a color image but simply stores the three single-component image data sets of the RGB components.

This output portion 36 can be mounted between the above-described decompressor portion 32 and YUV-RGB converter portion 33 or between the YUV-RGB converter portion 33 and composing portion 34. Of course, immediately after processing performed in the decompressor portion 32 or YUV-RGB converter portion 33, only the single-component image data sets 320-323 of the Y-U-V-G2 components or single-component image data sets 330-333 of the R-G1-G2-B components are obtained; a complete image is not obtained. However, as described previously, the original image can be recognized at some degree of accuracy only by the single-component image data set of the G1 component, only by the single-component image data set of the G2 component, only by the YUV components obtained by converting the remaining R-G1-B components by the RGB-YUV converter portion, or only by the Y component of the YUV components. Accordingly, the output portion 36 may be mounted between the above-described decompressor portion 32 and YUV-RGB converter portion 33 or between the YUV-RGB converter portion 33 and composing portion 34. That is, where the technique of the present invention is used, it is necessary to know the processing performed in the composing portion 34 in order to obtain a complete image. Furthermore, it is necessary to have the decomposing portion (13 in Fig. 1). However, if the processing in the composing portion 34 is not known, or if the decomposing portion (13 in Fig. 1) is not equipped, the image can be seen at some degree of accuracy based on data received from the transmitter side. 1-3. Description of the Operation

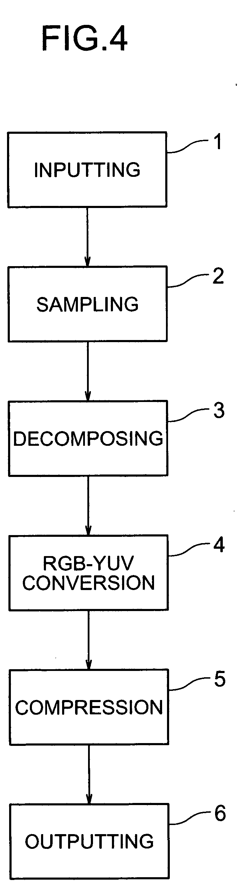

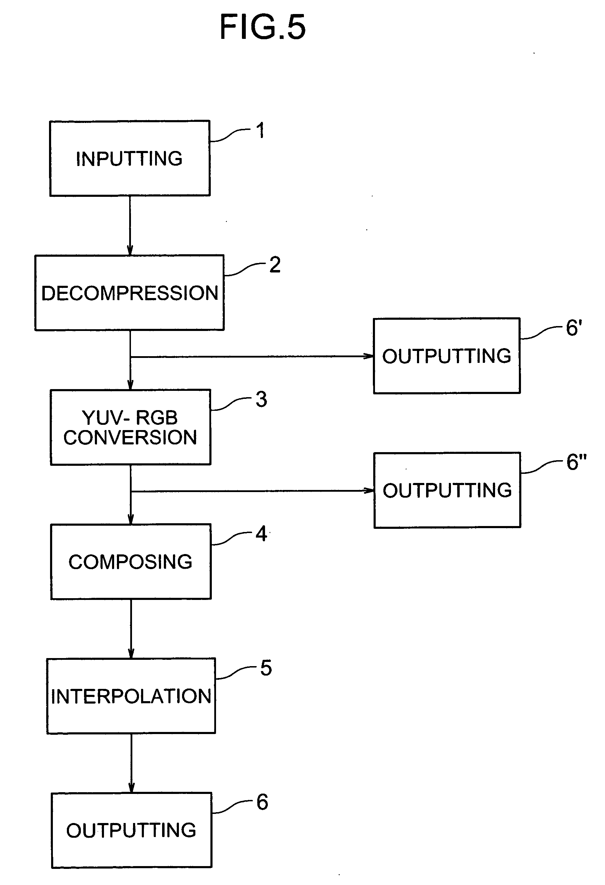

The operation of the compression unit and decompression unit according to the present invention is described next by referring to the flowcharts of Figs. 4 and 5.

Fig. 4 illustrates the operation of the compression unit. First, a color image is accepted into the unit by the input portion (step 1). Then, given information is sampled from pixels of single-component image data sets by the down-sampling portion (120-122 of Fig. 1) (step 2). Then, the decomposing portion changes the three single-component image data sets of the sampled RGB components into four single-component image data sets of R-G1-G2-B components and compresses the single-component image data sets (130-133 of Fig. 1) (step 3) . Thereafter, the RGB-YUV converter portion converts the R-G1-B components into YUV components (step 4) . As a result, the three single-component image data sets of the YUV components and the single-component image data set of the G2 component, i.e., four single-component image data sets in total (140-143 of Fig. 1), are created. Furthermore, information regarding the four single-component image data sets of the Y-U-V-G2 components are compressed using JPEG (step 5) . Finally, a file is output from the output portion (step 6).

Fig. 5 illustrates the operation of the decompression unit. First, a file is received by the input portion (step 1) . Then, the decompression portion decompresses the compressed file to decode information about the four single-component image data sets (320-323 in Fig. 3) of the Y-U-V-G2 components (step 2). Then, the YUV-RGB converter portion converts the YUV components into RGB components to create three single-component image data sets of unconverted R-G1-B components and single-component image data set of the G2 component (i.e., 4 single-component image data sets in total) (330-333 of Fig. 3) (step 3). Furthermore, the composing portion converts the four single-component image data sets of the R-G1-G2-B components into three single-component image data sets of RGB components. Also, positional information lost in the decomposing portion is reflected in the converted three single-component image data sets of the RGB components, and the single-component image data sets are expanded to their original size (340-342 of Fig. 3) (step 4). Then, the interpolation portion recovers the color information lost by the processing performed in the down-sampling portion by an interpolation technique, and the original color image is recovered (step 5) . Finally, the image data sets are output as recovered image data sets or displayed (step 6). As described previously, the outputting step may be carried out between steps 2 and 3 (i.e., in step 6') or between steps 3 and 4 (i.e., in step 6") . Note that the recovered image data that can be output in the steps 6' and 6" is different in resolution from the recovered image data output in step 6. A switching device (not shown) may be mounted, and these various kinds of recovered image data may be arbitrarily selected and output by the user. For example, according to whether the user has paid the fee or not, the recovered image data that can be output in steps 6' and 6" (i.e., output image consisting of one single-component image data set (in this case, a color image with half resolution)) is output. Alternatively, the recovered image data that can be output in step 6 (i.e., output image consisting of the expanded three single-component image data sets of RGB components) can be output. In the latter case, the color image can be set to a size equal to the size obtained prior to compression.

### 2. Second Embodiment

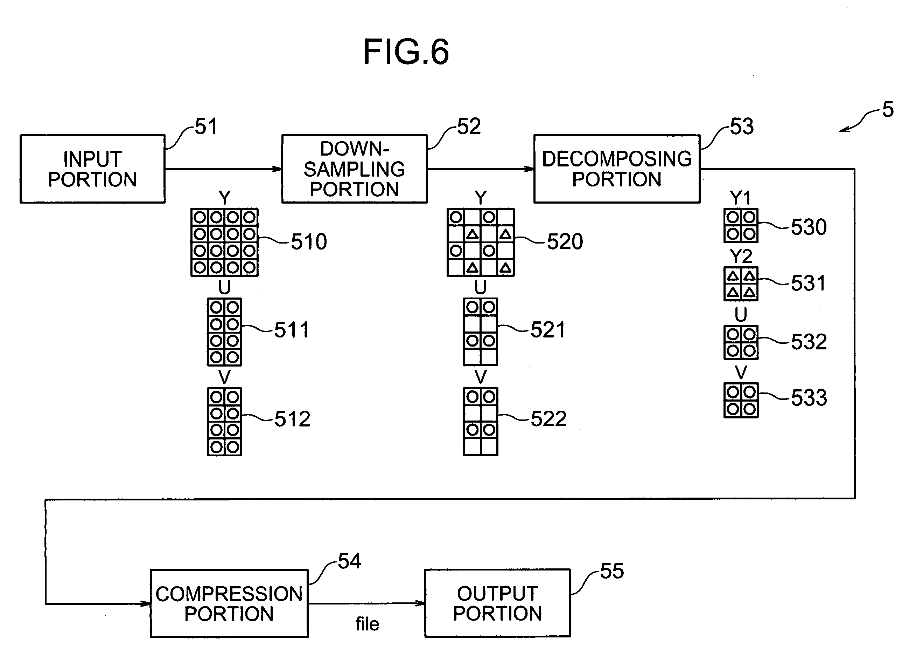

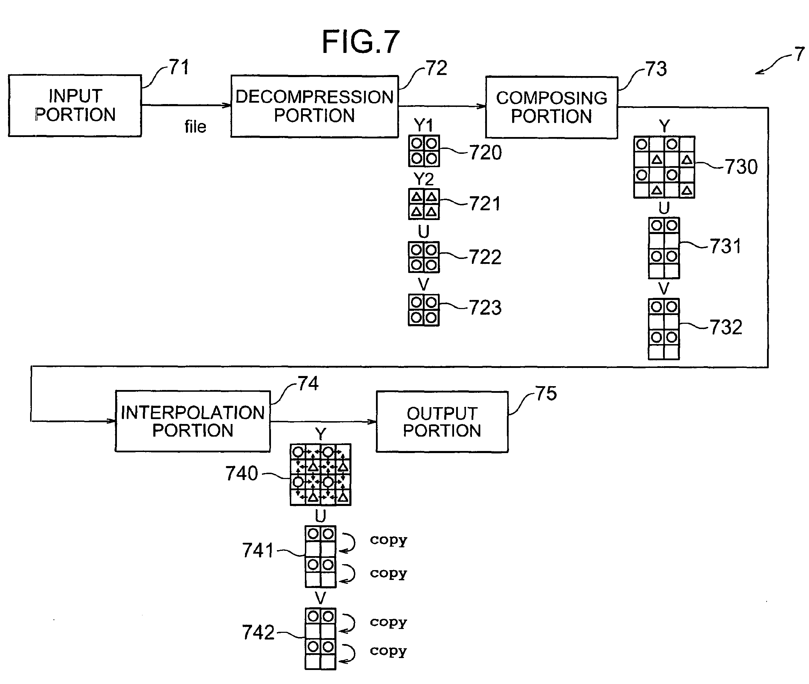

In the description of the first embodiment described above, a color image is represented by R, G, and B components. The image may also be represented by Y, U, and V components. In this second embodiment, the RGB-YUV converter portion (14 of Fig. 1) and the corresponding YUV-RGB converter portion (33 of Fig. 3) are unnecessary unlike in the first embodiment. The second embodiment, especially the differences with the first embodiment, is described below by referring to Figs. 6 and 7. It may be understood that Figs. 6 and 7 correspond to Figs. 1 and 3, respectively, in the first embodiment. Also, items not specifically stated are identical with their counterparts of the first embodiment.

### 2-1. Acceptance and Compression of Image

In Fig. 6, an input portion 51 accepts data in YUV format made up of single-component image data sets 510, 511, and 512 of YUV components. In this case, the Y component contains data about 4 × 4 pixels, for example. On the other hand, each of the U and V components contains data about 4 × 2 pixels.

A down-sampling portion 52 creates a single-component image data set 520 of the Y component by extracting 1 pixel from every 4 pixels regarding the single-component image data set 510 of the Y component (e.g., by performing sampling at given positions especially of the G component of the Bayer array of primary colors described already in connection with Fig. 1, for example, as shown in Fig. 6, (i.e., by sampling pixels at locations indicated by O and Δ)). On the other hand, with respect to the single-component image data sets 511 and 512 of the U and V components, single-component image data sets 521 and 522 of the U and V components are created by extracting 1 pixel from every 2 pixels (e.g., by sampling data at the positions of the first and third rows of 4 × 2 pixels (i.e., by sampling pixels at the locations indicated by O) as shown in Fig. 6.

A decomposing portion 53 changes the three single-component image data sets 520, 521, and 522 of the sampled YUV components into four single-component image data sets of Y1-U-V-Y2 components and reduces the size of each single-component data set (530, 531, 532, and 533 of Fig. 6). In this example, it may be understood that the single-component image data sets 530 and 531 of the Y1 and Y2 components correspond to the single-component image data sets (131 and 132 of Fig. 1) of the G1 and G2 components in the first embodiment, and that the single-component image data sets 532 and 533 of the U and V components correspond to the single-component image data sets (130 and 133 of Fig. 1) of the R and B components in the first embodiment. That is, with respect to the three single-component image data sets 520, 521, and 522 of the YUV components, the single-component image data set 520 of the Y component of 4 × 4 pixels is divided into two and contracted by the processing performed in the decomposing portion 53. As a result, single-component image data sets 530 and 531 of the Y1 and Y2 components of 2 × 2 pixels (half resolution) are created. On the other hand, single-component image data sets 521 and 522 of the U and V components of 4 × 2 pixels are contracted into single-component image data sets 532 and 533 of the U and V components of 2 × 2 pixels.

A compression portion 54 compresses information about the four single-component image data sets 530-533 of the Y1-U-V-Y2 components, for example, using JPEG2000. In this case, processing by JPEG2000 is not done twice unlike the G2 component of the first embodiment. Therefore, the data can be created as one file. The output portion 55 outputs this file.

### 2-2. Decompression of Compressed Data

In Fig. 7, an input portion 71 receives a file. A decompression portion 72 decompresses this file by a method corresponding to the method of compression used during compression. As a result, four single-component image data sets 720-723 of the Y1-U-V-Y2 components of 2 × 2 pixels as shown in Fig. 7 are restored.

A composing portion 73 converts the four single-component image data sets 720-723 of the Y1-U-V-Y2 components into three single-component image data sets 730-732 of the YUV components and expands each single-component image data set into its original size by reflecting the positional information lost in the decomposing portion in the three single-component image data sets of the converted YUV components. That is, by the processing performed in this composing portion 73, the single-component image data sets 722 and 723 of the U and V components each of 2 × 2 pixels are expanded into single-component image data sets 731 and 722 of the U and V components, respectively, of 4 × 4 pixels (full resolution) . The single-component image data sets 720 and 721 of the Y1 and Y2 components, respectively, each of 2 × 2 pixels are combined with the Y component and expanded into a single-component image data set 730 of the Y component of 4 × 4 pixels (full resolution).

An interpolation portion 74 interpolates the single-component image data set 740 of the Y component, for example, by a method similar to the method used for the single-component image data set (341 of Fig. 3) of the G component of the first embodiment. On the other hand, with respect to the single-component image data sets 741 and 742 of the U and V components, respectively, interpolation is performed by copying locations (e.g., pixels in the first and third rows) sampled by the decomposing portion (53 in Fig. 6) into their underneath unsampled locations (e.g., second and fourth rows) . Since this interpolation method is well known to the skilled in the art, the method is not described in detail herein.

### 3. Others

In the description of the above embodiments, each of the transmitter and receiver is classified into plural parts. This classification is intended for illustrative purposes only. For example, in actual unit or apparatus, the function of the input portion of the transmitter side and the function of the down-sampling portion are often executed at once. That is, a color image is generally detected using a detector where plural detector elements for detecting only certain color components are arranged under the condition where the image is sampled from the beginning. Accordingly, the method of classification is not important for the present invention of this application. In addition, the method is offered as computer software.

Further, in the description of the above embodiments, the G component is divided into two: G1 and G2 components. Alternatively, the Y component is divided into two: Y1 and Y2 components. It is not always necessary that each component be divided into two. The component may be divided into three or more. The requirement is only that an image is finally obtained by synthesis.

In addition, in the specification of the present invention, only embodiments regarding single-component image data sets of RGB and YUV components have been described. Where information about colors is represented by similar single-component data sets, the present invention may be similarly applied. Additionally, an important feature of the invention is that single-component image data sets about colors are divided. The present invention is not limited to the aspects of the invention set forth in the embodiments of the invention.

Obviously, an image data compression unit or decompression unit according to the present invention can also be constituted as a single CODEC (compression unit-decompression unit) having the features of both units. In addition, these compression unit, decompression unit, and CODEC may be implemented as programs for operating a computer as an image data compression unit, decompression unit, or CODEC according to the present invention.

### 4. Advantages of the Invention

According to the present invention described so far, image data can be sent and received with a smaller amount of data than heretofore.

## Claims

1. A compression unit for compressing image data, said compression unit acting (a) to receive plural single-component image data sets regarding colors which can be obtained by sampling image data about a certain region, to (b) divide at least one of said plural single-component image data sets into plural single-component image data sets to thereby convert said single-component image data sets into a greater number of single-component image data sets, and then (c) to perform compression.

2. A decompression unit for decompressing compressed image data which is obtained by a compression unit for (a) receiving plural single-component image data sets regarding colors which can be obtained by sampling image data about a certain region, (b) dividing at least one of said single-component image data sets into plural single-component image data sets to thereby convert said single-component image data sets into a greater number of single-component image data sets, and then (c) performing compression,
wherein said decompression unit combines said plural single-component image data sets obtained by decompressing said compressed image data into one to thereby convert the single-component image data sets greater in number than said plural single-component image data sets into said plural single-component image data sets and then performs decompression.

3. A compression unit for compressing image data, said compression unit acting to:
(a) obtain pixels from plural pixels arranged in horizontal and vertical directions, each of said pixels having individual color information in a corresponding one of three single-component image data sets of RGB components, by performing given sampling;
(b) eliminate unsampled pixels and move them in the horizontal and vertical directions to couple them together regarding the single-component image data sets of said R and B components;
(c) divide the single-component image data of said G component into two single-component image data sets of G1 and G2 components such that pixels uniformly spaced from each other in the horizontal and vertical directions become identical components;
(d) eliminate unsampled pixels and move them in the horizontal and vertical directions to couple them together, for converting the three single-component image data sets of said RGB components into four single-component image data sets of R-G1-G2-B components; and then
(e) perform compression.

4. A compression unit as set forth in claim 3, wherein the compression is performed after said four single-component image data sets of the R-G1-G2-B components obtained by the conversion have been converted into four single-component image data sets of Y-U-V-G2 components.

5. A decompression unit for decompressing compressed image data obtained by an image data compression unit for (a) obtaining pixels from plural pixels arranged in horizontal and vertical directions, each of said pixels having individual color information in a corresponding one of three single-component image data sets of RGB components, by performing given sampling, (b) eliminating unsampled pixels and moving them in the horizontal and vertical directions to couple them together regarding the single-component image data sets of said R and B components, (c) dividing the single-component image data of said G component into two single-component image data sets of G1 and G2 components such that pixels uniformly spaced from each other in the horizontal and vertical directions become identical components, (d) eliminating unsampled pixels and moving them in the horizontal and vertical directions to couple them together, for converting the three single-component image data sets of said RGB components into four single-component image data sets of R-G1-G2-B components, and then (e) performing compression,
wherein said decompression unit (A) moves pixels obtained by performing said sampling in the horizontal and vertical directions to return the pixels to their original positions regarding single-component image data sets of said R and B components obtained by decompressing said compressed image data sets, (B) combines the single-component image data sets of said G1 and G2 components into one and moves the pixels obtained by performing said sampling in the horizontal and vertical directions to return them to their original positions regarding the single-component image data sets of said G1 and G2 components, (C) converts the four single-component image data sets of said R-G1-G2-B components into the three single-component image data sets of said RGB components, and then (D) performs decompression.

6. A decompression unit as set forth in claim 5, wherein the decompression is performed after the four single-component image data sets of the Y-U-V-G2 components have been converted into four single-component image data sets of said R-G1-G2-B components.

7. A compression unit for compressing image data, said compression unit acting to:
(a) obtain pixels from plural pixels arranged in horizontal and vertical directions by performing sampling , each of said plural pixels having individual color information in a corresponding one of three single-component image data sets of YUV components, such that 1 pixel is extracted from every 4 pixels regarding the single-component image data set of said Y component and that 1 pixel is extracted from every 2 pixels regarding the single-component image data sets of said U and V components;
(b) eliminate unsampled pixels and move them in the horizontal or vertical direction to couple them together regarding the single-component image data sets of said U and V components;
(c) divide the single-component image data set of said Y component into two single-component image data sets of Y1 and Y2 components such that pixels uniformly spaced from each other in the horizontal and vertical directions become identical components;
(d) eliminate unsampled pixels and move them in the horizontal and vertical directions to couple them together, for converting the three single-component image data sets of said YUV components into four single-component image data sets of Y1-U-V-Y2 components; and then
(e) perform compression.

8. A decompression unit for decompressing compressed image data which is obtained by a compression method comprising the steps of: (a) obtaining pixels from plural pixels arranged in horizontal and vertical directions by performing sampling, each of said plural pixels having individual color information in a corresponding one of three single-component image data sets of YUV components, such that 1 pixel is extracted from every 4 pixels regarding the single-component image data set of said Y component and that 1 pixel is extracted from every 2 pixels regarding the single-component image data sets of said U and V components; (b) eliminating unsampled pixels and moving them in the horizontal or vertical direction to couple them together regarding the single-component image data sets of said U and V components; (c) dividing the single-component image data set of said Y component into two single-component image data sets of Y1 and Y2 components such that pixels uniformly spaced from each other in the horizontal and vertical directions become identical components; (d) eliminating unsampled pixels and moving them in the horizontal and vertical directions to couple them together, for converting the three single-component image data sets of said YUV components into four single-component image data sets of Y1-U-V-Y2 components; and then (e) performing compression,
wherein said decompression unit performs the decompression after converting the four single-component image data sets of said Y1-U-V-Y2 components into the three single-component image data sets of said YUV components such that the pixels obtained by performing said sampling are moved in the horizontal or vertical direction to return them to their original positions regarding the single-component image data sets of said U and V components obtained by decompressing said compressed image data and that the single-component image data sets of said Y1 and Y2 components are combined into one and the pixels obtained by performing said sampling are moved in the horizontal and vertical directions to return them to their original positions.

9. A decompression unit as set forth in any one of claims 3, 5, 7, and 8, wherein the method by which the pixels are moved has been previously settled with said compression unit.

10. A decompression unit as set forth in any one of claims 3, 5, 7, and 8, wherein said compression unit is informed of the method by which the pixels are moved, from a side of said decompression unit using data.

11. A compression unit comprising:
means for sampling given plural components making up image data;
means for creating a greater number of single-component image data sets formed by a part of any one component of said given plural components than said given plural components from said sampled data; and
means for compressing said single-component image data sets;
wherein at least two of said single-component image data sets are made up of an identical component out of said given plural components.

12. A compression unit as set forth in claim 11, wherein said given plural components are 3 components of R, G, and B or 3 components of Y, U, and V.

13. A compression unit as set forth in any one of claims 11 and 12, further comprising means for converting said single-component image data sets into single-component image data sets made up of other components of different natures.

14. A decompression unit comprising:
means for decompressing image data compressed by a compression unit as set forth in any one of claims 11 to 13 to return the image data to said single-component image data sets;
means for expanding said single-component image data sets; and
means which, when there are two or more single-component image data sets made up of an identical component out of said given plural components, couples together and expands these single-component image data sets.

15. A compression unit as set forth in claim 14, further comprising means for converting said single-component image data sets into single-component image data sets made up of other components of different natures.

16. A compression unit as set forth in any one of claims 14 and 15, further comprising:
means for creating a first decompressed image data set from said plural single-component image data sets; and
means for creating a second decompressed image data set from said expanded single-component image data sets;
wherein said first and second decompressed image data sets can be switchingly output, only one at a time.

17. A compression unit as set forth in any one of claims 1, 3, 4, 7, 11, 12, 13, and 15, wherein one of JPEG and JPEG2000 is used for said compression.

18. A decompression unit as set forth in any one of claims 2, 5, 6, 8, 9, 10, 14, and 16, wherein one of JPEG and JPEG2000 is used for said decompression.

19. A compression or decompression program for causing a computer to function as a compression unit or decompression unit as set forth in any one of claims 1 to 18.
